# EUROPÄISCHE PATENTSCHRIFT

(11) **EP 1 791 787 B1**
(45) Veröffentlichungstag und Bekanntmachung des Hinweises auf die Patenterteilung: **03.03.2010**
(21) Anmeldenummer: 05785587.6
(22) Anmeldetag: 02.09.2005
(51) Int. Cl.: C01C 3/02

(54) **VERFAHREN ZUR HERSTELLUNG VON BLAUSÄURE**
METHOD FOR THE PRODUCTION OF HYDROCYANIC ACID
PROCEDE DE PRODUCTION D'ACIDE CYANHYDRIQUE

(30) Priorität: 06.09.2004 DE 102004042986
(43) Veröffentlichungstag der Anmeldung: 06.06.2007
(73) Patentinhaber: BASF SE, 67056 Ludwigshafen (DE)
(72) Erfinder: DECKERS, Andreas, 55234 Flomborn (DE); LAUTERBACH, Arnulf, 67067 Ludwigshafen (DE); NEGELE, Anton, 67146 Deidesheim (DE); SCHNEIDER, Thomas, 67227 Frankenthal (DE)
(86) Internationale Anmeldenummer: PCT/EP2005/009476
(87) Internationale Veröffentlichungsnummer: WO 2006/027176

(56) Entgegenhaltungen:
- DE-A1- 2 947 828
- DE-A1- 10 138 553
- DE-B1- 1 592 347
- DE-C- 927 623

## Beschreibung

Die Erfindung betrifft ein Verfahren zur Herstellung von Blausäure (HCN) durch katalytische Dehydratisierung von gasförmigem Formamid in Anwesenheit von Sauerstoff.

Blausäure ist eine wichtige Grundchemikalie, die als Edukt in zahlreichen organischen Synthesen wie der Herstellung von Methacrylsäureestern, Milchsäure und Metallcyaniden, als Polyamid-Vorstufe, zur Herstellung von pharmazeutischen und agrochemischen Produkten, im Bergbau und in der metallurgischen Industrie eingesetzt wird.

Ein wichtiges Verfahren zur industriellen Herstellung von Blausäure ist die thermische Dehydratisierung von Formamid im Vakuum, die nach der folgenden Gleichung (I) abläuft:

HCONH₂ → HCN + H₂O (I)

Diese Umsetzung ist von der Zersetzung des Formämids gemäß Gleichung (II) unter Bildung von Ammoniak und Kohlenmonoxid begleitet:

HCONH₂ -. NH₃ + CO (II)

Der gebildete Ammoniak katalysiert die Polymerisation der gewünschten Blausäure und führt somit zu einer Beeinträchtigung der Glualität der Blausäure und einer Verringerung der Ausbeute an der gewünschten Blausäure.

Bei der Herstellung von Blausäure bildet sich Ruß, was durch die Zugabe von geringen Mengen Sauerstoff in Form von Luft, wie in EP-A 0 209 039 offenbart ist, unterdrückt werden kann. Dort wird ein Verfahren zur thermolytischen Spaltung von Formamid an hochgesinterten Aluminiumoxid- oder Aluminiumoxid-Siliziumdioxid-Formkörpern oder an hochtemperatur-korrosionsfesten Chrom-Nickel-Edelstahl-Formkörpern beschrieben. Da der Formamid-Umsatz in diesem Verfahren nicht vollständig ist, schlägt die DE-A 101 38 553 vor, nicht umgesetztes Rest-Formamid in die Formamid-Spaltung zurückzuführen.

Aufgabe der Erfindung ist es, ein einfach durchzuführendes Verfahren zur Herstellung von Blausäure durch katalytische Dehydratisierung von Formamid bereitzustellen, welches durch einen hohen Formamid-Umsatz und eine hohe Blausäure-Ausbeute gekennzeichnet ist.

Gelöst wird die Aufgabe durch ein Verfahren zur Herstellung von Blausäure durch katalytische Dehydratisierung von gasförmigem Formamid, bei dem aus dem Produktgemisch der Dehydratisierung ein Formamid enthaltender Rückführstrom abgetrennt und in die Dehydratisierung zurückgeführt wird, wobei der Formamid enthaltende Rückführstrom 5 bis 50 Gew.-% Wasser enthält, dadurch gekennzeichnet, dass aus dem Produktgemisch der Dehydratisierung ein Gemisch aus Wasser, Formamid, Hochsiedern und gelösten Gasen als Kondensat 1 auskondensiert wird, aus dem Kondensat 1 ein Teil des Wassers und der gelösten Gase abgetrennt wird, wobei ein Kondensat 3 aus Wasser, Formamid und Hochsiedern erhalten wird, und der Formamid enthaltende Rückführstrom durch einfache Destillation aus dem Kondensat 3 abgetrennt wird.

Vorzugsweise wird die Formamid-Dehydratisierung in Gegenwart von Sauerstoff durchgeführt.

Es wurde gefunden, dass nicht-umgesetztes Formamid nach Abtrennung von Hochsiedern als wasserhaltiges Gemisch in die Formamid-Dehydratisierung zurückgeführt werden kann, ohne dass sich der Wassergehalt des zurückgeführten Formamids negativ auf die Selektivität der Blausäure-Bildung auswirkt. Damit kann eine aufwendige Abtrennung von reinem Formamid durch Rektifikation entfallen. Dadurch wird ein wesentlich einfacheres Verfahren realisiert.

In dem erfindungsgemäßen Verfahren wird gasförmiges Formamid in Anwesenheit von im Allgemeinen 0 bis 10 mol% Luftsauerstoff, bezogen auf die eingesetzte Formamidmenge, bevorzugt von 0,1 bis 10 mol.%, besonders bevorzugt von 0,5 bis 3 mol-% Luftsauerstoff bei Temperaturen von im allgemeinen 400 bis 600°C, bevorzugt von 450 bis 550°C, besonders bevorzugt von 500 bis 550°C dehydratisiert.

Das erfindungsgemäße Verfahren wird im Allgemeinen bei vermindertem Druck, bevorzugt bei einem Druck von 70 bis 350 mbar, besonders bevorzugt bei 80 bis 200 mbar durchgeführt. Die Dehydratisierung wird üblicher Weise in einem Mehrrohrreaktor durchgeführt. Die mittlere Verweilzeit am Katalysator beträgt im allgemeinen 0,01 bis 0,5 s, bevorzugt 0,05 bis 0,2 s.

Im Allgemeinen setzt man in dem erfindungsgemäßen Verfahren gasförmiges Formamid ein. Bevorzugt wird das Formamid dadurch erhalten, dass flüssiges Formamid in einem Wärmetauscher, bevorzugt einem Rohrbündelwärmetauscher, Fallfilmverdampfer oder Dünnschichtverdampfer, unter vermindertem Druck von im allgemeinen 1 bis 350 mbar, bevorzugt von 80 bis 250 mbar und bei Temperaturen von im Allgemeinen 100 bis 300°C, bevorzugt von 130 bis 200°C verdampft wird. Der Formamid-Dampf wird anschließend in dem Dehydratisierungsreaktor oder in einem vorgeschalteten Wärmetauscher auf die Reaktionstemperatur gebracht.

Geeignete Katalysatoren sind beispielsweise hochgesinterte Formkörper aus 50 bis 100 Gew.-%, bevorzugt 85 bis 95 Gew.-% Aluminiumoxid und 0 bis 50 Gew.-%, bevorzugt 5 bis 15 Gew.-% Siliziumdioxid, Chrom-Nickel-Edelstahl-Formkörper, wie in EP-A 0 209 039 beschrieben, und Packungen aus Stahl oder Eisenoxid auf einem porösen Träger, wie in DE-A 101 38 553 beschrieben.

Es wird ein Produktgemisch erhalten, welches neben Blausäure und Wasser nicht umgesetztes Formamid, Ammoniak, CO und Hochsieder wie Polymere und Salze enthält. Aus dem bei der Dehydratisierung gebildeten Produktgasgemisch wird ein Gemisch aus Wasser, Formamid und Hochsiedern sowie geringen Mengen an Ammoniak und HCN als Kondensat 1 auskondensiert. Dabei wird das Produktgasgemisch, das den Dehydratisierungsreaktor üblicher Weise mit einer Temperatur von 400 bis 600 °C verlässt, in einem Wärmetauscher auf eine Temperatur von 10 bis 80 °C abgekühlt. Es verbleibt ein Gasstrom, der im Wesentlichen aus Blausäure, Wasser, Ammoniak und CO besteht. Aus diesem Gasstrom wird Blausäure gewonnen. Vorzugsweise wird dabei Ammoniak durch Extraktion, beispielsweise durch Absorption in Schwefelsäure, entfernt, und Blausäure anschließend als Kondensat 2 erhalten.

Aus dem Kondensat 1 wird das rückgeführte wasserhaltige Formamid gewonnen. Dabei wird das rückgeführte Formamid nicht direkt aus dem Kondensat 1 gewonnen, sondern aus dem Kondensat 1 ein Teil des Wassers und von darin gelösten Gasen beispielsweise in einer Stripkolonne abgetrennt, wobei ein Kondensat 3 aus Wasser, Hochsiedern und Formamid erhalten wird, und wird der Formamid enthaltende Rückführstrom durch einfache Destillation aus dem Kondensat 3 abgetrennt.

Aus dem Kondensat 1 werden gelöste Gase und Wasser bei im Allgemeinen 50 bis 120 °C, vorzugsweise 60 bis 120 °C und bei 70 bis 400 mbar, vorzugsweise 80 bis 200 mbar, in einer Strippkolonne abgetrennt. Es verbleibt ein Sumpfprodukt aus im Allgemeinen 50 bis 85 Gew.-% Formamid, 10 bis 40 Gew.-% Wasser, 5 bis 10 Gew.-% Hochsiedern und 0 bis 2 Gew.-% gelösten Gasen als Kondensat 3.

Aus dem Kondensat 3 wird der Formamid enthaltende Rückführstrom durch einfache Destillation abgetrennt. Der Formamid enthaltende Rückführstrom enthält 5 bis 50 Gew.-%, bevorzugt 15 bis 30 Gew.-% Wasser. Daneben kann er noch geringe Mengen Ammoniak und HCN enthalten, im Allgemeinen in Mengen von 0 bis 1 Gew.-%. Die einfache Destillation zur Abtrennung des Formamid enthaltenden Rückführstroms wird im Allgemeinen bei einem Druck von 20 bis 150 mbar, vorzugsweise bei 50 bis 100 mbar, beispielsweise bei 75 mbar und einer Temperatur von 110 bis 160 °C, vorzugsweise bei 130 bis 160°C, beispielsweise bei 145 °C, durchgeführt. Die einfache Destillation wird vorzugsweise in einem Verdampfer, beispielsweise einem Rohrbündelwärmetauscher mit Natur- und Zwangsumlauf, durchgeführt.

Mit dem erfindungsgemäßen Verfahren wird im Allgemeinen ein Formamid-Umsatz von 80 bis 98 %, bezogen auf das insgesamt der Dehydratisierung zugeführte Formamid (frisch zugeführtes + rückgeführtes Formamid) erreicht. Die Selektivität der Blausäure-Bildung beträgt im Allgemeinen von 85 bis 96 %.

Die Erfindung wird durch die nachstehenden Beispiele näher erläutert.

### Beispiele

### Beispiel 1

In den in Beispiel 1 der EP-A 0 209 039 beschriebenen Einrohrreaktor, der eine Schüttung aus Katalysator-Formkörpern aus 93 Gew.-% Al₂O₃ und 7 Gew.-% SiO₂ in Form von Raschigringen der Abmessungen 15 x 15 x 2 mm enthält, werden 10 l/(h x m²) Formamid-Dampf (frisch zugeführtes und rückgeführtes Formamid) und 0,3 kg/h Luft eingeleitet und bei einem Druck von 140 mbar und einer Temperatur von 420 °C dehydratisiert. Es wird ein Formamid-Umsatz von 90,5 % erzielt. Aus dem Produktgasgemisch werden 2,1 l/(h x m²) eines Gemischs aus 45 Gew.-% Formamid, 50 Gew.-% Wasser, 2 Gew.-% Hochsiedern und 3 Gew.-% Ammoniak und HCN auskondensiert. Von diesem Gemisch wird zunächst durch eine einfache Destillation bei 90 -120 mbar und 60 - 85 °C ein Leichtsieder-Gemisch aus Wasser und darin gelösten Gasen abgetrennt. Es verbleibt ein Gemisch, welches Formamid, Hochsieder und ca. 30 Gew.-% Wasser enthält (Kondensat 3). Dieses Formamid enthaltende Gemisch wird in einer anschließenden Rektifikation in einer Packungskolonne mit 6 theoretischen Trennstufen bei einem Druck von 100 mbar in Wasser, Formamid und Hochsieder aufgetrennt, wobei im Wesentlichen reines Formamid mit einem Formamid-Gehalt > 98 Gew.-% als Seitenabzug gewonnen wird. Das reine Formamid (0,77 1/(h x m²), entsprechend 81 % der auskondensierten Formamid-Menge) wird in den Reaktor zurückgeführt. Durch die Rückführung werden der Formamid-Umsatz, bezogen auf das insgesamt eingesetzte Formamid (frisch zugeführtes und rückgeführtes Formamid), und die Selektivität der Umsetzung nicht verändert.

### Beispiel 2

Es wird wie in Beispiel 1 verfahren, jedoch wird die Rektifikation durch eine einfache destillative Abtrennung von Formamid und Wasser aus dem Kondensat ersetzt. Es wird ein Gemisch aus ca. 70 Gew.-% Formamid, ca. 30 Gew.-% Wasser und< 1 Gew.-% Ammoniak in den Dehydratisierungsreaktor zurückgeführt. Es wird ein höherer Umsatz von 92,7 % (gegenüber nur 90,5 % in Beispiel 1), bezogen auf das insgesamt eingesetzte Formamid (frisch zugeführtes und rückgeführtes Formamid) erzielt, wobei die Selektivität der Umsetzung nicht verändert wird. Durch die vereinfachte Formamid-Rückgewinnung wird, bezogen auf auskondensiertes Formamid, eine größere Formamid-Menge zurückgeführt (0,66 l/(h x m²), entsprechend 90 % der auskondensierten Formamid-Menge).

## Patentansprüche

1. Verfahren zur Herstellung von Blausäure durch katalytische Dehydratisierung von gasförmigem Formamid, bei dem aus dem Produktgemisch der Dehydratisierung ein Formamid enthaltender Rückführstrom gewonnen und in die Dehydratisierung zurückgeführt wird, wobei der Formamid enthaltende Rückführstrom 5 bis 50 Gew.-% Wasser enthält, **dadurch gekennzeichnet, dass** aus dem Produktgasgemisch der Dehydratisierung ein Gemisch aus Wasser, Formamid, Hochsiedern und gelösten Gasen als Kondensat 1 auskondensiert wird, aus dem Kondensat 1 ein Teil des Wasser und der gelösten Gase abgetrennt wird, wobei ein Kondensat 3 aus Wasser, Formamid und Hochsiedern erhalten wird, und der Formamid enthaltende Rückführstrom durch einfache Destillation aus dem Kondensat 3 abgetrennt wird.

2. Verfahren nach Anspruch 1, **dadurch gekennzeichnet, dass** die katalytische Dehydratisierung in Gegenwart von Sauerstoff durchgeführt wird.

3. Verfahren nach Anspruch 1 oder 2, **dadurch gekennzeichnet, dass** die einfache Destillation bei einem Druck von 20 bis 150 mbar und einer Temperatur von 110 bis 160 °C durchgeführt wird.

4. Verfahren nach einem der Ansprüche 1 bis 3, **dadurch gekennzeichnet, dass** die katalytische Dehydratisierung bei einer Temperatur von 400 bis 600 °C und einem Druck von 70 bis 350 mbar durchgeführt wird.

## Claims

1. A process for preparing hydrocyanic acid by catalytic dehydration of gaseous formamide, in which a formamide-comprising recycle stream is obtained from the product mixture after the dehydration and is recirculated to the dehydration, the formamide-comprising recycle stream comprising from 5 to 50% by weight of water, wherein a mixture of water, formamide, high boilers and dissolved gases is condensed out as condensate 1 from the product gas mixture after the dehydration, part of the water and the dissolved gases is separated off from the condensate 1 to give a condensate 3 comprising water, formamide and high boilers, and the formamide-comprising recycle stream is separated off from the condensate 3 by simple distillation.

2. The process according to claim 1, wherein the catalytic dehydration is carried out in the presence of oxygen.

3. The process according to claim 1 or 2, wherein the simple distillation is carried out at a pressure of from 20 to 150 mbar and a temperature of from 110 to 160°C.

4. The process according to any of claims 1 to 3, wherein the catalytic dehydration is carried out at a temperature of from 400 to 600°C and a pressure of from 70 to 350 mbar.

## Revendications

1. Procédé pour la production d'acide cyanhydrique pat déshydratation catalytique du formamide gazeux, dans lequel on obtient à partir du mélange gazeux de produits de la déshydratation un courant de recyclage contenant du formamide et on le renvoie dans la déshydratation, le courant de recyclage contenant du formamide contenant de 5 à 50 % en poids d'eau, **caractérisé en ce qu'**un mélange d'eau, de formamide et de composés à haut point d'ébullition et de gaz dissous est séparé par condensation, sous forme de condensat 1, du mélange gazeux de produits de la déshydratation, une partie de l'eau et des gaz dissous est séparée du condensat 1, de sorte qu'on obtient un condensat 3 à base d'eau, de formamide et de composés à haut point d'ébullition, et le courant de recyclage contenant du formamide est séparé du condensat 3 par simple distillation.

2. Procédé selon la revendication 1, **caractérisé en ce que** la déshydratation catalytique est effectuée en présence d'oxygène.

3. Procédé selon la revendication 1 ou 2, **caractérisé en ce que** la simple distillation est effectuée sous une pression de 20 à 150 mbars et à une température de 110 à 160 °C.

4. Procédé selon l'une quelconque des revendications 1 à 3, **caractérisé en ce que** la déshydratation catalytique est effectuée à une température de 400 à 600 °C et sous une pression de 70 à 350 mbars.
